# EUROPEAN PATENT SPECIFICATION

(11) **EP 2 397 893 B1**
(45) Date of publication and mention of the grant of the patent: **19.10.2016**
(21) Application number: 11168574.9
(22) Date of filing: 02.06.2011
(51) Int. Cl.: G02F 1/167

(54) **Electrophoretic device, display, and electronic apparatus**
Elektrophoretische Vorrichtung, Anzeige und elektronische Vorrichtung
Dispositif électrophorétique, affichage et appareil électronique

(30) Priority: 18.06.2010 JP 2010139419; 15.04.2011 JP 2011090694
(43) Date of publication of application: 21.12.2011
(73) Proprietor: Sony Corporation, Tokyo 108-0075 (JP)
(72) Inventor: Takanashi, Hidehiko, Minato-ku, Tokyo 108-0075 (JP); Kobayashi, Ken, Minato-ku, Tokyo 108-0075 (JP); Kaino, Yuriko, Minato-ku, Tokyo 108-0075 (JP); Shuto, Aya, Minato-ku, Tokyo 108-0075 (JP)
(74) Representative: D Young & Co LLP

(56) References cited:
- US-A1- 2007 018 361
- US-A1- 2008 112 040

## Description

The present invention relates to an electrophoretic device including an electrophoretic particle in an insulating liquid, a display using the electrophoretic device, and an electronic apparatus using the display.

Along with recent widespread use of mobile appliances such as cellular phones and portable information terminals, the demand for low-power-consumption, high-image-quality displays has grown. Recently, due to the emergence of electronic book (e-book) distribution services, portable information terminals for reading (e-book readers), designed to allow users to read character information for an extended period of time are drawing much attention. Displays that have display quality suitable for this usage are highly desired.

Examples of the proposals of the displays for reading include cholesteric liquid crystal displays, electrophoretic displays, electrical redox displays, and twist-ball displays. In particular, reflective displays are preferred. This is because reflective displays use reflection (scattering) of external light to present bright display as with paper and thus achieve display quality close to that of paper. Moreover, power consumption is low since no backlight is provided.

Prospective candidates of reflective displays are electrophoretic displays that create contrast by using electrophoretic phenomena. This is because electrophoretic displays offer low power consumption and good rapid response. Thus, various studies have been made on display methods of electrophoretic displays.

For example, Japanese Examined Patent Application Publication No. 50-015115 and Japanese Patent No. 4188091 propose a method for moving charged particles in response to an electric field by dispersing two types of charged particles having different optical reflective properties in an insulating liquid. According to this method, since two types of charged particles have polarities opposite from each other, the distribution state of the charged particles changes in response to an electric field.

Also proposed is a method for moving charged particles via pores of a porous layer in response to an electric field by providing the porous layer and dispersing the charged particles in an insulating liquid - refer to Japanese Unexamined Patent Application Publication Nos. 2005-107146, 2005-128143, and 2002-244163 and Japanese Examined Patent Application Publication No. 50-015120. According to this method, a polymer film having pores formed by laser perforation, a cloth made of woven synthetic fiber or the like, or an open cell porous polymer is used as the porous layer.

Despite various proposals of display methods regarding electrophoretic displays, the display quality achieved thereby is not yet satisfactory. Improvements on contrast and speed of response are desired in order for electrophoretic displays to be suitable for further developments such as colorization and movie display. In such cases also, in order to offer full benefits of electrophoretic displays, it is desirable that the power consumption stay low.

US 2008/112040 forms the basis of the two-part form of claim 1 and discloses a display medium that includes at least: a pair of substrates, at least one of the substrates having optical transparency; a dispersion medium positioned in a gap between the pair of substrates; one or more kinds of electrophoretic particles or two or more kinds of electrophoretic particles different in color from each other, included in the dispersion medium; and a holder disposed between the pair of substrates, the holder, which may be fibrous, having a function of holding the electrophoretic particles and a function of controlling, by an external voltage, a movement amount of the electrophoretic particles on the holder; furthemore, a white material can optionally be fixed to the surface of the fibrous holder.

US 2007/0018361 discloses an apparatus and method for fabricating nanofibers by reactive electrospinning. An electrospinning process is coupled with an in-line reactor where chemical or photochemical reactions take place. This invention expands the application of the electrospinning and allows the production of nanofibers of crosslinked polymers and other new materials, such as gel nanofibers of ceramic precursors.

It is desirable to provide an electrophoretic device, a display, and an electronic apparatus that can achieve high contrast, rapid response, and low power consumption.

Various respective aspects and features of the invention are defined in the appended claims.

An embodiment of the present invention provides an electrophoretic device that includes an insulating liquid, electrophoretic particles in the insulating liquid, and a porous layer including one or more fibrous structures, the porous layer being disposed in the insulating liquid. The one or more fibrous structure include non-electrophoretic particles having an optical reflective property different from that of the electrophoretic particle. The non-electrophoretic particles are supported and retained by the one or more fibrous structures. The non-electrophoretic particles are at least partly buried inside the one or more fibrous structures.

Another embodiment of the present invention provides a display that includes a pair of substrates, at least one of which is optically transparent, and the aforementioned electrophoretic device disposed between the pair of substrates. Yet another embodiment of the present invention provides an electronic apparatus that includes the display.

The optical reflective property is the optical reflectance. The optical reflective property of the electrophoretic particles is adjusted to be different from that of the non-electrophoretic particles so that contrast is created by using the difference in property between these particles.

As a result, not only contrast is increased but also the speed of response of the electrophoretic particles is increased and the energy for moving the electrophoretic particles is lowered. Thus, high contrast, rapid response, and low power consumption can be achieved. A display or an electronic apparatus equipped with the electrophoretic device can display high-quality images at low power consumption.

Embodiments of the invention will now be described with reference to the accompanying drawings, throughout which like parts are referred to by like references, and in which:
Fig. 1 is a plan view of an electrophoretic device according to an embodiment of the present invention;
Fig. 2 is a cross-sectional view of the electrophoretic device;
Fig. 3 is a cross-sectional view of a display including an electrophoretic device;
Fig. 4 is a cross-sectional view illustrating operation of the display;
Figs. 5A and 5B are perspective diagrams showing structures of electronic books using the display;
Fig. 6 is a perspective diagram showing a structure of a television apparatus using the display;
Figs. 7A and 7B are perspective diagrams showing structures of digital still cameras using the display;
Fig. 8 is a perspective view showing the appearance of a personal computer using the display;
Fig. 9 is a perspective diagram showing the appearance of a video camera using the display; and
Figs. 10A to 10G are plan views showing a structure of a cellular phone using the display.

Various embodiments of the present invention are now described in detail with reference to the drawings. The order of description is as follows:
1. Electrophoretic device
2. Examples of usage of electrophoretic device (display)
3. Examples of usage of display (electronic apparatus) 1. Electrophoretic device

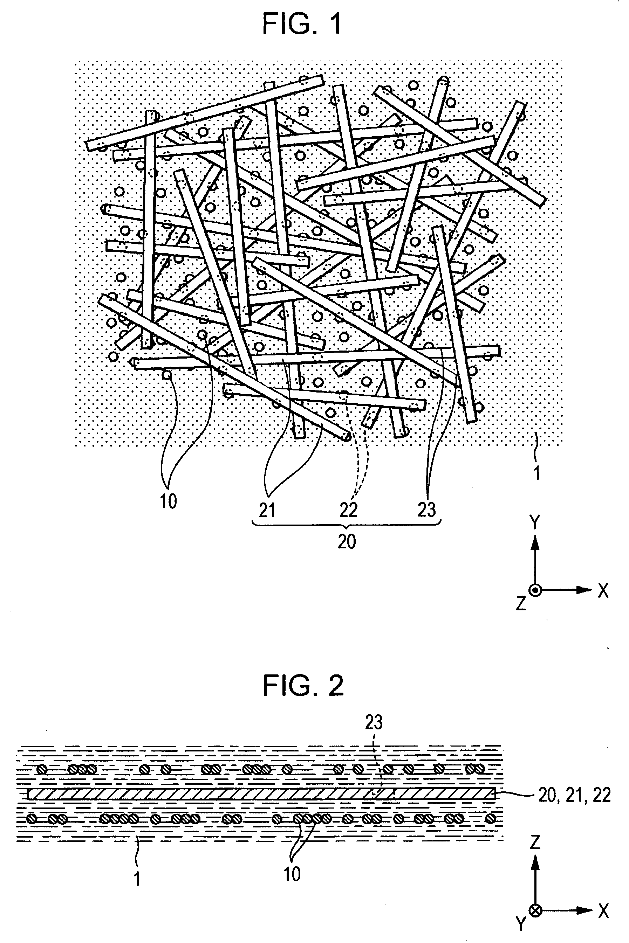

Figs. 1 and 2 are a plan view and a cross-sectional view of an electrophoretic device according to an embodiment of the present invention.

The electrophoretic device creates contrast by utilizing electrophoretic phenomena, and is used, for example, in various electronic appliances such as display apparatuses. The electrophoretic device includes an insulating liquid 1, and an electrophoretic particle 10 and a porous layer 20 in the insulating liquid 1. The porous layer has pores 23.

### 1.1 Insulating liquid

The insulating liquid 1 may be one or more organic solvents. For example, the insulating liquid 1 is paraffin or isoparaffin. The viscosity and refractive index of the insulating liquid 1 are preferably as low as possible. This is to improve the mobility (speed of response) of the electrophoretic particles 10 and lower the energy (power consumption) for moving the electrophoretic particles 10. Furthermore, since the difference in refractive index between the insulating liquid 1 and the porous layer 20 widens, the reflectance of the porous layer 20 is increased.

The insulating liquid 1 may contain various materials as desired. Examples of the materials include a colorant, a charge control agent, a dispersion stabilizer, a viscosity adjustor, a surfactant, and resin.

### 1.2 Electrophoretic particle

An electrophoretic particle 10 is a charged particle dispersed in the insulating liquid 1 and can migrate through pores 23 in response to an electric field. The number of electrophoretic particles 10 (charged particles) may be one or more. The electrophoretic particle 10 is, for example, at least one type of particles (powder) selected from an organic pigment, an inorganic pigment, a dye, a carbon material, a metal material, a metal oxide, glass, a polymer material (resin), and the like. The electrophoretic particle 10 may be a capsule particle or a ground particle of a resin solid containing the above-described particle. The materials categorized as carbon materials, metal materials, metal oxides, glass, and polymer materials are excluded from the material categorized as organic pigments, inorganic pigments, and dyes.

Examples of the organic pigments include azo pigments, metal complex azo pigments, polycondensed azo pigments, flavanthrone pigments, benzimidazolone pigments, phthalocyanine pigments, quinacridone pigments, anthraquinone pigments, perylene pigments, perinone pigments, anthrapyridine pigments, pyranthrone pigments, dioxazine pigments, thioindigo pigments, isoindolinone pigments, quinophthalone pigments, and indanthrene pigments. Examples of the inorganic pigments include zinc white, antimony white, carbon black, iron black, titanium boride, red iron oxide, Mapico Yellow, red lead, cadmium yellow, zinc sulfide, lithopone, barium sulfide, cadmium selenide, calcium carbonate, barium sulfate, lead chromate, lead sulfate, barium carbonate, white lead, and alumina white. Examples of the dyes includes nigrosin dyes, azo dyes, phthalocyanine dyes, quinophthalone dyes, anthraquinone dyes, and methine dyes. An example of the carbon material is carbon black. Examples of the metal materials include gold, silver, and copper. Examples of the metal oxide include titanium oxide, zinc oxide, zirconium oxide, barium titanate, potassium titanate, copper-chromium oxide, copper-manganese oxide, copper-iron-manganese oxide, copper-chromium-manganese oxide, and copper-iron-chromium oxide. Examples of the polymer materials include polymer compounds with functional groups having an optical absorption region in the visible light region. The polymer compound may be of any type as long as it has an optical absorption region in the visible light region.

The content (concentration) of the electrophoretic particles 10 in the insulating liquid 1 is not particularly limited and may be, for example, 0.1 to 10 wt%. This is to ensure mobility and shielding property of the electrophoretic particles 10. When the content is less than 0.1 wt%, it may become difficult for the electrophoretic particles 10 to shield (hide) the porous layer 20. In contrast, when the content is greater than 10 wt%, it may become difficult for the electrophoretic particles 10 to migrate due to a decreased dispersibility of the electrophoretic particles 10, possibly resulting in aggregation.

The electrophoretic particle 10 may have any optical reflective property (optical reflectance). The optical reflectance of the electrophoretic particle 10 is not particularly limited, but the electrophoretic particle 10 preferably has a capacity to shield the porous layer 20. This is to generate contrast from the difference in optical reflectance between the electrophoretic particle 10 and the porous layer 20.

The material making up the electrophoretic particle 10 is, for example, selected depending on the function the electrophoretic particles 10 exhibit to generate contrast. When the electrophoretic particle 10 is used to achieve bright display, the material may be a metal oxide such as titanium oxide, zinc oxide, zirconium oxide, barium titanate, or potassium titanate. When the electrophoretic particle 10 is used to achieve dark display, the material may be a carbon material or a metal oxide. The carbon material may be carbon black and the metal oxide may be copper-chromium oxide, copper-manganese oxide, copper-iron-manganese oxide, copper-chromium-manganese oxide, or copper-iron-chromium oxide. Among these, a carbon material is preferable because high chemical stability, mobility, and optical absorption property are obtained.

When the electrophoretic particle 10 is used to achieve bright display, the color of the electrophoretic particle 10 identified when the electrophoretic device is viewed from outside is not particularly limited as long as contrast can be created. The color is preferably one close to white and more preferably white. When the electrophoretic particle 10 is used to achieve dark display, the color of the electrophoretic particle 10 identified when the electrophoretic device is viewed from outside is not particularly limited as long as contrast can be created. The color is preferably one close to black and more preferably black. This is to achieve high contrast.

The electrophoretic particles 10 preferably stay dispersed in the insulating liquid 1 over a long term, are preferably easily chargeable over a long term, and preferably do not easily adsorb to the porous layer 20. In order to disperse the electrophoretic particles 10 by electrostatic repulsion, a dispersant (or charge control agent) may be used, the electrophoretic particles 10 may be subjected to surface treatment, or both.

Examples of the dispersant include Solsperse series dispersants produced by The Lubrizol Corporation, BYK series dispersants and Anti-Terra series dispersants produced by BYK-Chemie, and Span series dispersants produced by ICI Americas Inc.

Examples of the surface treatment include rosin treatment, surfactant treatment, pigment derivative treatment, coupling agent treatment, graft polymerization treatment, and microcapsulation treatment. Among these, graft polymerization treatment, microcapsulation treatment, or the combination of the two is preferred. This is because long-term dispersion stability can be achieved.

Examples of the material used for the surface treatment include a material (adsorbing material) that has a polymerizable functional group and a functional group that can adsorb to surfaces of the electrophoretic particles 10. The type of the functional group that can adsorb to the surfaces is determined based on the material forming the electrophoretic particles 10. For example, when a carbon material such as carbon black is used to form the electrophoretic particles 10, an aniline derivative such as 4-vinylaniline is used. When a metal oxide is used to form the electrophoretic particles 10, an organosilane derivative such as 3-(trimethoxysilyl)propyl methacrylate is used. Examples of the polymerizable functional group include a vinyl group, an acryl group, and a methacryl group.

Another example of the material used for the surface treatment is a material (grafting material) that can be grafted onto surfaces of the electrophoretic particles 10 into which a polymerizable functional group is introduced. The grafting material preferably has a polymerizable functional group and a dispersing functional group that can be dispersed in the insulating liquid 1 and can keep the dispersed state due to steric hindrance. The type of the polymerizable functional group is the same as the adsorbing material described above. The dispersing functional group may be a branched alkyl group when the insulating liquid 1 is paraffin. In order to polymerize and graft the grafting material, a polymerization initiator such as azobisisobutyronitrile (AIBN) may be used, for example.

For reference, the details of the method for dispersing the electrophoretic particles 10 in the insulating liquid 1 are given in literatures such as "Dispersion techniques of ultrafine particles and evaluation thereof --- Surface treatment, ultrafine grinding, and dispersion stabilization in gas/liquid/polymer [translated title] [literature in Japanese]" published by Science Technology Co., Ltd.

### 1.3 Porous layer

The porous layer 20 is a three-dimensional structure (irregular network structure such as that of a nonwoven cloth) formed of fibrous structures 21 and has gaps (pores 23) therein. The fibrous structures 21 include one or more non-electrophoretic particles 22. In other words, the non-electrophoretic particles 22 are supported by the fibrous structures 21. The porous layer 20, which is a three-dimensional structure, may include one fibrous structure 21 tangled in a random manner, two or more fibrous structures 21 aggregated with and superimposed on one another in a random manner, or both. When two or more fibrous structures 21 are provided, each fibrous structure 21 preferably support at least one non-electrophoretic particle 22. Fig. 2 illustrates the case in which the porous layer 20 is formed of plural fibrous structures 21.

The porous layer 20 is configured as a three-dimensional structure formed of the fibrous structures 21 since the porous layer 20 exhibits a higher reflectance due to diffuse reflection (multiple scattering) of light (external light) and thus the porous layer 20 may be thin. This increases the contrast of the electrophoretic device and lowers the energy for moving the electrophoretic particles 10. This also increases the average pore size and the number of the pores 23, thereby facilitating migration of the electrophoretic particles 10 through the pores 23. As a result, the speed of response is increased and the energy for moving the electrophoretic particles 10 is lowered.

The non-electrophoretic particles 22 are included in the fibrous structures 21 to promote diffuse reflection of light and increase the reflectance of the porous layer 20. As a result, the contrast of the electrophoretic device is enhanced.

The fibrous structures 21 are a fibrous substance having a length sufficiently larger than the fiber diameter. The fibrous structures 21 may be composed of at least one of polymer materials, inorganic materials, and any other suitable materials. Examples of the polymer material include nylon, polylacetic acid, polyamide, polyimide, polyethylene terephthalate, polyacrylonitrile, polyethylene oxide, polyvinyl carbazole, polyvinyl chloride, polyurethane, polystyrene, polyvinyl alcohol, polysulfone, polyvinyl pyrrolidone, polyvinylidene fluoride, polyhexafluoropropylene, cellulose acetate, collagen, gelatin, chitosan, and copolymers of these. Examples of the inorganic materials include titanium oxide. Of these, a polymer material is preferred as a material for forming the fibrous structures 21. This is because a polymer material has low reactivity such as low optical reactivity (chemically stable), and thus suppresses undesirable decomposition of the fibrous structures 21. When the fibrous structures 21 are composed of a material having a high reactivity, the surfaces of the fibrous structures 21 are preferably coated with protective layers.

The shape (appearance) of the fibrous structures 21 is not particularly limited as long as the length is sufficiently larger than fiber diameter. The shape may be straight, curled, or bent. The fibrous structures 21 may extend in one direction or may branch in one or more directions. The method for forming the fibrous structures 21 is not particularly limited. For example, a phase separation method, a phase inversion method, an electrospinning (field spinning) method, a melt spinning method, a wet spinning method, a dry spinning method, a gel spinning method, a sol gel method, and a spray coating method are preferred. According to these methods, fibrous substances having a length sufficiently larger than the fiber diameter can be easily and stably produced.

The average fiber diameter of the fibrous structures 21 is not particularly limited but is preferably as small as possible to promote diffused scattering of light and increase the pore size of the pores 23. The average fiber diameter is determined so that the fibrous structures 21 can support the non-electrophoretic particles 22. From this viewpoint, the average fiber diameter of the fibrous structures 21 is preferably 10 µm or less. The lower limit of the average fiber diameter is not particularly limited and may be, for example, 0.1 µm or less. The average fiber diameter is measured by microscopic observation with a scanning electron microscope, for example. The average length of the fibrous structures 21 may be any.

The average pore size of the pores 23 is not particularly limited but is preferably as large as possible to facilitate migration of the electrophoretic particles 21 through the pores 23. From this viewpoint, the average pore size of the pores 23 is preferably 0.1 µm to 10 µm.

The thickness of the porous layer 20 is not particularly limited and may be, for example, 5 µm to 100 µm. When the thickness is in this range, the shielding property of the porous layer 20 is enhanced and migration of the electrophoretic particles 10 through the pores 23 is facilitated.

The fibrous structures 21 are preferably nanofibers. This is because more light can be diffusely scattered, the reflectance of the porous layer 20 can be increased, and the ratio of the pores 23 occupied per unit volume is increased, thereby facilitating migration of the electrophoretic particles 10 through the pores 23. As a result, contrast is enhanced and the energy for moving the electrophoretic particles 10 is lowered. Nanofibers are fibrous substances having a diameter of 0.001 µm to 0.1 µm and a length at least 100 times greater than the diameter. The fibrous structures 21 which are nanofibers are preferably formed by an electrospinning method since fibrous structures 21 having a small diameter can be easily and stably formed.

The fibrous structures 21 preferably have different optical reflective properties from the electrophoretic particles 10. The optical reflectance of the fibrous structures 21 is not particularly limited. Preferably, the porous layer 20 as a whole can shield the electrophoretic particles 10. As described above, this is to generate contrast from the difference in optical reflectance between the electrophoretic particles 10 and the porous layer 20. Thus, optically transparent (transparent and colorless) fibrous structures 21 in the insulating liquid 1 are not favorable. When the influence of the optical reflectance of the fibrous structures 21 on the optical reflectance of the porous layer 20 is negligible and when the optical reflectance of the porous layer 20 is practically determined by the optical reflectance of the non-electrophoretic particles 22, the optical reflectance of the fibrous structures 21 may be any.

The non-electrophoretic particles 22 are retained (fixed) by the fibrous structures 21 and do not undergo electrophoresis. The number of non-electrophoretic particles 22 may be 1 or more. The material for the non-electrophoretic particles 22 is the same as the material for the electrophoretic particles 10 and is selected based on the function of the non-electrophoretic particles 22, as described below.

The non-electrophoretic particles 22 may be partly exposed from the fibrous structures 21 as long as they are retained by the fibrous structures 21 or may be buried inside the fibrous structures 21.

The non-electrophoretic particles 22 have different optical reflective properties from the electrophoretic particles 10. The optical reflectance of the non-electrophoretic particles 22 is not particularly limited. Preferably, at least the porous layer 20 as a whole can shield the electrophoretic particles 10. As described above, this is to generate contrast from the difference in optical reflectance between the electrophoretic particles 10 and the porous layer 20.

The material making up the non-electrophoretic particles 22 is selected, for example, depending on the function the non-electrophoretic particles 22 exhibit to generate contrast. The material of the non-electrophoretic particles 22 used in achieving bright display is the same as the material for the electrophoretic particles 10 used in achieving bright display. The material of the non-electrophoretic particles 22 used in achieving dark display is the same as the material for the electrophoretic particles 10 used in achieving dark display. The material selected when the non-electrophoretic particles 22 are used in achieving bright display is preferably a metal oxide since high chemical stability, fixability, and optical reflectivity can be achieved. The material for the non-electrophoretic particles 22 may be the same as or different from the material for forming the electrophoretic particles 10 as long as contrast can be generated.

The colors of the non-electrophoretic particles 22 recognized in bright or dark display are the same as the case of the electrophoretic particles 10.

The porous layer 20 may be formed through the following process. First, a material (e.g., polymer material) for forming fibrous structures 21 is dissolved in an organic solvent or the like to prepare a spinning solution. Non-electrophoretic particles 22 are added to the spinning solution, and the mixture is thoroughly stirred to disperse the non-electrophoretic particles 22. Lastly, the spinning solution is spun by an electrospinning method. As a result, the non-electrophoretic particles 22 are retained by the fibrous structures 21 and the porous layer 20 is formed.

### 1.4 Display method for electrophoretic device

Contrast is created in an electrophoretic device because the electrophoretic particles 10 and the porous layer 2.0 (the fibrous structures 21 containing the non-electrophoretic particles 22) respectively achieve bright display and dark display, as described above. The electrophoretic particles 10 may be used to achieve bright display and the porous layer 20 may be used to achieve dark display, or vice versa. The difference in functions is determined by the relationship regarding the optical reflectance between the electrophoretic particles 10 and the porous layer 20. In other words, one that achieves bright display has an optical reflectance higher than one that achieves dark display.

Preferably, the electrophoretic particles 10 are used for dark display and the porous layer 20 are used for bright display. When the optical reflectance of the porous layer 20 is practically determined by the optical reflectance of the non-electrophoretic particles 22, the optical reflectance of the non-electrophoretic particles 22 is preferably higher than that of the electrophoretic particles 10. This is because the optical reflectance of the bright display in this case is significantly high due to diffused scattering of light at the porous layer 20 (three-dimensional structure) and thus a very high contrast is achieved.

### 1.5 Operation of electrophoretic device

In the electrophoretic device, the optical reflectance of the electrophoretic particles 10 differ from that of the porous layer 20 (non-electrophoretic particles 22). When an electric field is applied to this electrophoretic device, the electrophoretic particles 10 migrate through the porous layer 20 (pores 23) in the range under the electric field. When the electrophoretic device is viewed from the side to which the electrophoretic particles 10 have migrated, the region in which the electrophoretic particles 10 have migrated appears dark (or bright) due to the migrated electrophoretic particles 10. Moreover, the region in which the electrophoretic particles 10 did not migrate appears bright (or dark) due to the porous layer 20. Accordingly, contrast is created.

### 1.6 Effects of electrophoretic device

The electrophoretic device includes the electrophoretic particle 10 and the porous layer 20 in the insulating liquid 1. The porous layer 20 is a three-dimensional structure formed by the fibrous structures 21 that contain a non-electrophoretic particle 22 having optical reflective properties different from those of the electrophoretic particles 10. Thus, light is diffusely scattered by the porous layer 20 and the electrophoresis particles 10 easily migrate through the porous layer 20. As a result, the contrast is enhanced, the mobility of the electrophoretic particles 10 is improved, and the energy for moving the electrophoretic particles 10 is lowered. High contrast, rapid response, and low power consumption can thereby achieved.

A higher effect can be achieved when the fibrous structures 21 are formed by electrospinning or are nanofibers. Since the optical reflectance of the non-electrophoretic particles 22 is higher than that of the electrophoretic particles 10, a higher effect can be achieved when the electrophoretic particles 10 are used for dark display and the porous layer 20 is used for bright display.

### 2. Examples of usage of electrophoretic device (display)

Next, usage of the electrophoretic device described above is described. The electrophoretic device can be applied to various electronic appliances, the type of which is not particularly limited. For example, it may be applied to a display.

### 2.1 Overall structure of display

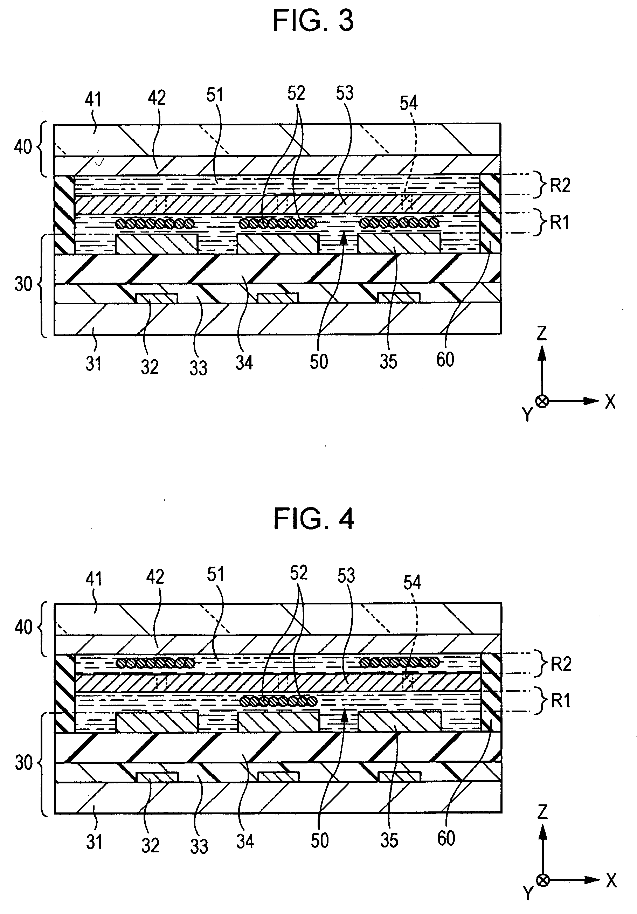

Fig. 3 is a cross-sectional view of a display. Fig. 4 is another cross-sectional view illustrating the operation of the display shown in Fig. 3. The configuration of the display presented below is a mere example and may be subject to modification.

A display is an electrophoretic display (a.k.a. e-paper display) that displays images (e.g., character information) by utilizing electrophoresis. The display includes a driving substrate 30 and a counter substrate 40 facing each other with an electrophoretic device 50 therebetween, as shown in Fig. 3. Images are displayed at the counter substrate 40 side, for example. The driving substrate 30 and the counter substrate 40 are arranged to keep a particular distance from each other with a spacer 60.

### 2.2 Driving substrate

The driving substrate 30 includes, for example, a supporting base 31, and a thin-film transistors (TFT) 32, a protective layer 33, a planarizing insulating layer 34, and pixel electrodes 35 formed in that order on a surface of the supporting base 31. The TFTs 32 and the pixel electrodes 35 are, for example, arranged into a matrix or a segment according to the arrangement of pixels.

The supporting base 31 is composed of, for example, an inorganic material, a metal material, or a plastic material. Examples of the inorganic material include silicon (Si), silicon oxide (SiOₓ), silicon nitride (SiNₓ), and aluminum oxide (AlOₓ). Silicon oxide includes glass and spin-on-glass (SOG). Examples of the metal material include aluminum (Al), nickel (Ni), and stainless steel. Examples of the plastic material include polycarbonate (PC), polyethylene terephthalate (PET), polyethylene naphthalate, (PEN), and polyethyl ether ketone (PEEK).

The supporting base 31 may be optically transparent or nontransparent. Since images are displayed at the counter substrate 40 side, the supporting base 31 need not be optically transparent. The supporting base 31 may be a substrate having stiffness, such as a wafer, or a flexible thin layer glass or film, but is preferably a flexible thin layer glass or film. This is because a flexible (bendable) display can be manufactured.

Each TFT 32 is a switching element for selecting pixels. The TFTs 32 may be inorganic TFTs using inorganic semiconductor layers as channel layers or organic TFTs using organic semiconductor layers as channel layers. The protective layer 33 and the planarizing insulating layer 34 are composed of, for example, an insulating resin material such as polyimide. The planarizing insulating layer 34 may be omitted if the surface of the protective layer 33 is sufficiently flat. The pixel electrodes 35 are composed of a metal material such as gold (Au), silver (Ag) or copper (Cu). The pixel electrodes 35 are connected to the TFTs 32 through contact holes (not shown) formed in the protective layer 33 and the planarizing insulating layer 34.

### 2.3 Counter substrate

The counter substrate 40 includes, for example, a supporting base 41 and a counter electrode 42 formed over the entire surface of the supporting base 41. Alternatively, the counter electrodes 42 may be configured to be the same as the pixel electrodes 32 and may be arranged in a matrix or a segment.

The supporting base 41 is composed of the same material as the supporting base 31 except that it is optically transparent. Since images are displayed at the counter substrate 40 side, the supporting base 41 is optically transparent. The counter electrode 42 is composed of an optically transparent electrically conductive material (transparent electrode material) such as indium oxide-tin oxide (ITO), antimony oxide-tin oxide (ATO), fluorine-doped tin oxide (FTO), or aluminum-doped zinc oxide (AZO).

When images are to be displayed at the counter substrate 40 side, the electrophoretic device 50 is viewed through the counter electrode 42. Thus, the optical transparency (transmittance) of the counter electrode 42 is preferably as high as possible, e.g., 80% or higher. The electric resistance of the counter electrode 42 is preferably as low as possible, e.g., 100 Ω/□ ("Ohms per square") or less.

### 2.4 Electrophoretic device

The electrophoretic device 50 has the same structure as the electrophoretic device described earlier. That is, the electrophoretic device 50 includes an insulating liquid 51, and electrophoretic particles 52 and a porous layer 53 having pores 54 in the insulating liquid 51. The insulating liquid 51 fills the space between the driving substrate 30 and the counter substrate 40 and the porous layer 53 is supported by, for example, the spacer 60. The space filled with the insulating liquid 51 is, for example, divided into a reserve region R1, which is near the pixel electrodes 35, and a display region R2, which is near the counter electrode 42, bordered by the porous layer 53. The features of the insulating liquid 51, the electrophoretic particles 52 and the porous layer 53 are the same as those of the insulating liquid 1, the electrophoretic particles 10, and the porous layer 20. In Figs. 3 and 4, only part of the pores 54 are shown to simplify the illustration.

Note that the space filled with the insulating liquid 51 is not necessarily clearly divided into two regions (reserve region R1 and display region R2) by the porous layer 53. This is because the porous layer 53 may be adjacent to at least one of the pixel electrode 35 and the counter electrode 42. It is sufficient to have a structure configured so that electrophoretic particles 52 are movable toward the pixel electrode 35 or the counter electrode 42 according to need.

### 2.5 Spacer

The spacer 60 is composed of, for example, an insulating material such as a polymer material.

The shape of the spacer 60 is not particularly limited but is preferably a shape that does not obstruct migration of the electrophoretic particles 52 and that renders homogeneous distribution of the electrophoretic particles 52. For example, the space 60 may have a grid shape. The thickness of the spacer 60 is also not particularly limited but is preferably as small as possible to lower the power consumption. The thickness is, for example, 10 µm to 100 µm.

### 2.6 Operation of display

As shown in Fig. 3, when the display is in an initial state, the electrophoretic particles 52 are located in the reserve region R1. In this state, since the electrophoretic particles 52 of all pixels are shielded by the porous layer 53, no contrast is created when the electrophoretic device 50 is viewed from the counter substrate 40 side, i.e., images are not displayed.

When pixels are selected through the TFTs 32 and electric fields are applied between the pixel electrodes 35 and the counter electrode 42, the electrophoretic particles 52 migrate to the display region R2 through the porous layer 53 (pores 54) from the reserve region R1, as shown in Fig. 4. In this state, there are pixels in which the electrophoretic particles 52 are shielded by the porous layer 53 and pixels in which the electrophoretic particles 52 are not shielded by the porous layer 53. Thus, contrast is created when the electrophoretic device 50 is viewed from the counter substrate 40 side. As a result, an image is displayed.

### 2.7 Effects of display

According to this display, the electrophoretic device 50 has the same features as the aforementioned electrophoretic device and thus, high contrast, rapid response, and low power consumption are achieved. Thus, high-quality images are displayed at low power consumption.

### 3. Usage of display (electronic apparatus)

Examples of the usage of the display described above will now be described.

The display described herein is applicable to electronic apparatuses of various usages. For example, the display can be mounted in a wide range of electronic apparatuses, as described below. The structures of the electronic apparatuses described below are merely illustrative and are subject to modifications and alterations.

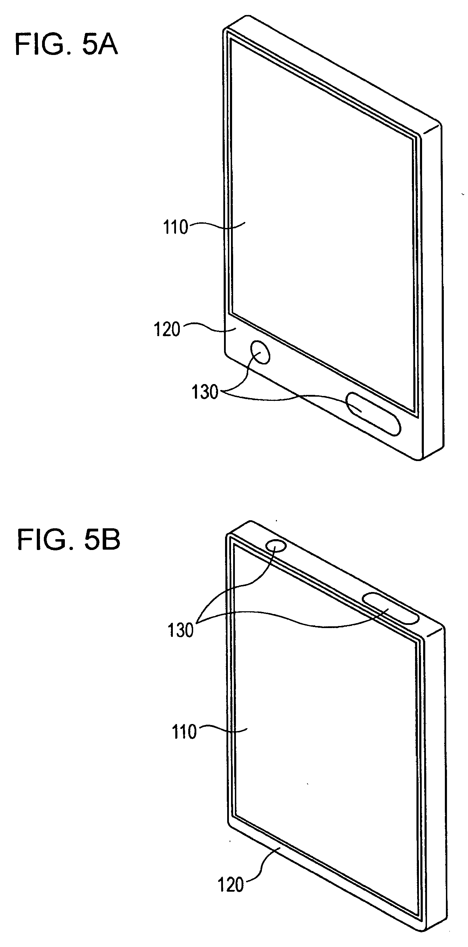

Figs. 5A and 5B each show the appearance of an electronic book. The electronic book includes, for example, a display unit 110, a non-display unit 120, and an operation unit 130. The operation unit 130 may be disposed on the front side of the non-display unit 120 as shown in Fig. 5A or on the upper side of the non-display unit 120 as shown in Fig. 5B. The display may be mounted in a PDA having a similar structure to the electronic books shown in Figs. 5A and 5B.

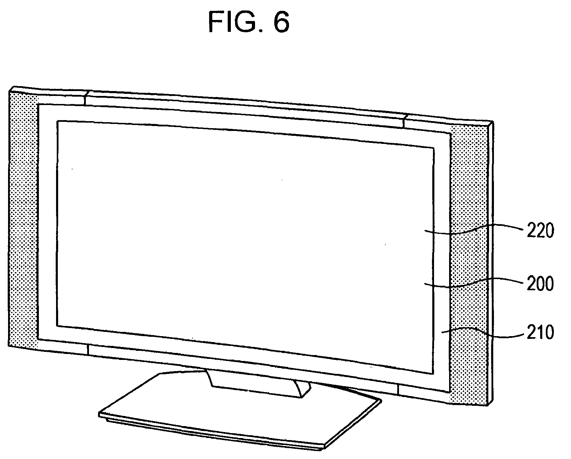

Fig. 6 shows the appearance of a television apparatus. The television apparatus includes, for example, an image display screen unit 200 that includes a front panel 210 and a filter glass 220.

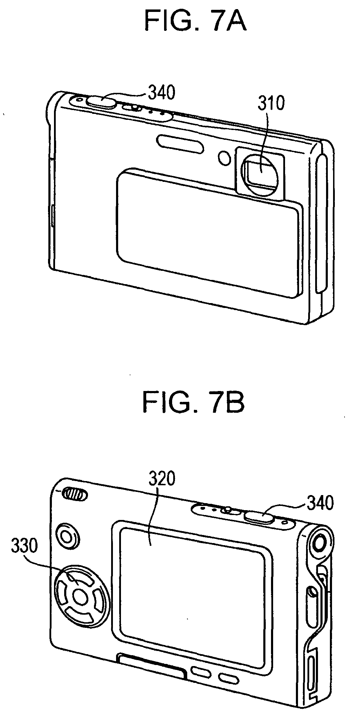

Figs. 7A and 7B show the appearance of a digital still camera. Fig. 7A shows the front side and Fig. 7B shows the rear side. The digital still camera includes, for example, a flashlight unit 310, a display unit 320, a menu switch 330, and a shutter-release button 340.

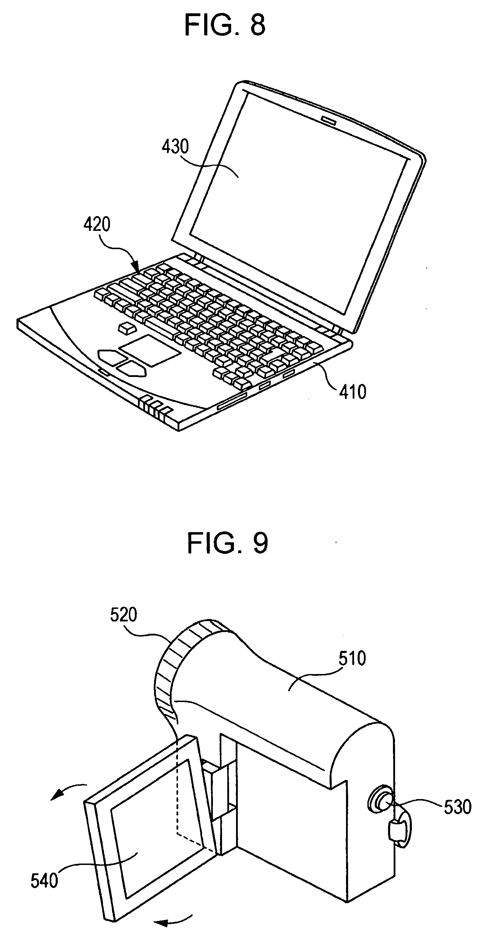

Fig. 8 shows the appearance of a notebook personal computer. The notebook personal computer include, for example, a main unit 410, a keyboard 420 for inputting characters, etc., and a display unit 430 configured to display images.

Fig. 9 shows the appearance of a video camera. The video camera includes, for example, a main unit 510, a subject shooting lens 520 disposed on the front side of the main unit 510, a shooting start/stop switch 530, and a display unit 540.

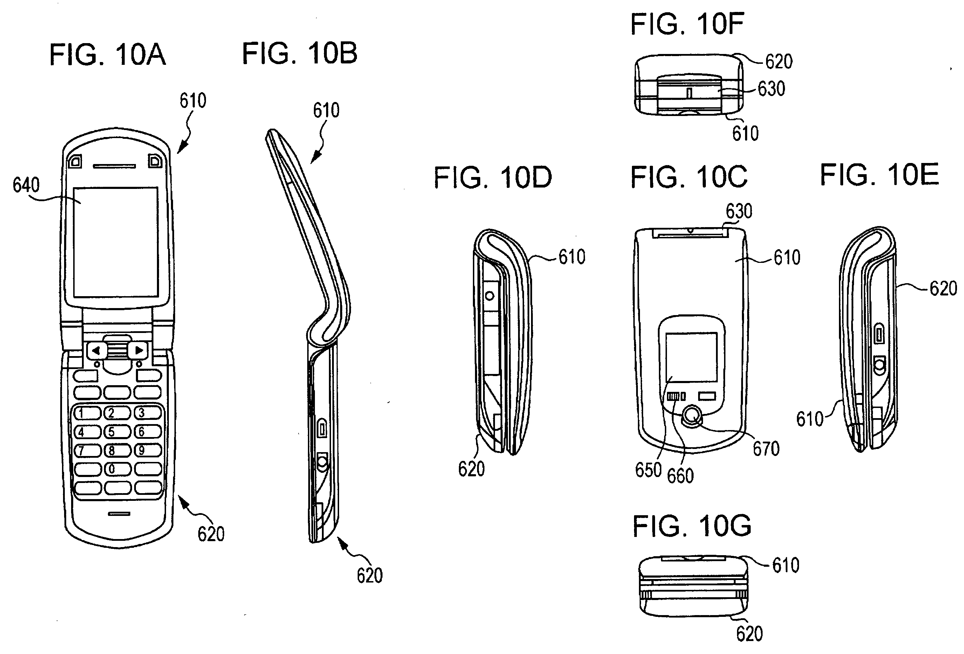

Figs. 10A to 10G are diagrams showing the appearance of a cellular phone. Figs. 10A and 10B respectively show a front face and a side face of the cellular phone in a flip open state. Figs. 10C to 10G respectively show the front face, a left side face, a right side face, an upper face, and a lower face of the cellular phone in a flip closed state. The cellular phone includes, for example, an upper casing 610 and a lower casing 620 connected to each other at a connecting portion (hinge) 630, a display 640, a sub-display 650, a picture light 660, and a camera 670.

### EXAMPLES

One embodiment of the present invention is now described in detail by way of examples, wherein Experimental Examples 1-7 fall within the scope of the invention, while Experimental Examples 8-11 represent reference Examples.

### Experimental Example 1

A display was fabricated by the process below by using black electrophoretic particles and a white porous layer (particle-containing fibrous structures).

First, 1 dm³ (= L) of water was added to 10 g of carbon black (#40 produced by Mitsubishi Chemical Corporation) and the resulting mixture was electromagnetically stirred. Thereto, 1 cm³ (= 1 mL) of hydrochloric acid (37 wt%) and 0.2 g of 4-vinylaniline were added to prepare a solution A. Then 0.3 g of sodium nitrite was dissolved in 10 cm³ of water. The resulting solution was heated to 40°C to prepare a solution B. The solution B was gradually added to the solution A, followed by stirring for 10 hours. The reaction products were centrifugally separated to obtain solid matter. The solid matter was rinsed with water, and then with acetone while performing centrifugal separation, and dried overnight in a vacuum drier (temperature: 50°C).

Into a reaction flask equipped with a nitrogen purging system, an electromagnetic stir rod, and a reflux column, 5 g of the solid matter, 100 cm³ of toluene, 15 cm³ of 2-ethylhexyl methacrylate, and 0.2 g of AIBN were placed and mixed. The reaction flask was purged with nitrogen for 30 minutes under stirring. Then the reaction flask was placed in an oil bath, gradually heated to 80°C under continuous stirring, and retained thereat for 10 hours. Solid matter was centrifugally separated, rinsed after every three operations of centrifugal separation with tetrahydrofuran and ethyl acetate, and discharged and placed in a vacuum drier (temperature = 50°C) to be dried overnight. As a result, 4.7 g of polymer-coated carbon black, i.e., black electrophoretic particles, was obtained.

An Isopar G (Exxon Mobil Corporation) solution containing 1.5% of sorbitan trioleate (Span 85) and a total of 0.5% of methoxysulfonyloxymethane (Solsperse 17000 produced by Lubrizol Ltd.), 12-hydroxyoctadecanoic acid, and N,N-dimethylpropane-1,3-diamine was prepared as an insulating liquid. To 9.9 g of this insulating liquid, 0.1 g of electrophoretic particles were added, and the mixture was stirred in a bead mill for 5 minutes. The mixture was centrifuged (5 minutes) with a centrifugal separator (speed = 2000 rpm) and the beads were removed.

In 88 g of N,N'-dimethylformamide, 12 g of polyacrylonitrile (PAN produced by Aldrich, molecular weight = 150,000), which is the raw material of fibrous structures, was dissolved to prepare a solution C. To 60 g of the solution C, 40 g of titanium oxide (TITONE R-42 produced by Sakai Chemical Industry Co., Ltd.) used as non-electrophoretic particles was added. The mixture was mixed in a bead mill to prepare a spinning solution. The spinning solution was placed in a syringe, and spinning corresponding to eight reciprocal motions was conducted on a glass substrate on which pixel electrodes (ITO) having a particular pattern are disposed, by using an electrospinning machine (NANON produced by MECC Co., Ltd.). Spinning conditions were as follows: electric field intensity = 28 kV, discharge rate = 0.5 cm³/min, spinning distance = 15 cm, scanning rate = 20 mm/sec. The glass substrate was then dried in a vacuum oven (temperature = 75°C) for 12 hours to form fibrous structures (polymer material). As a result, fibrous structures containing non-electrophoretic particles that form a white porous layer were obtained.

Unwanted fibrous structures adhering to regions where no pixel electrodes were formed were removed from the glass substrate on which pixel electrodes were disposed. A polyethylene terephthalate (PET) film 50 µm in thickness was placed to serve as a spacer on a counter electrode (ITO) formed on the entire surface of a glass substrate. The glass substrate with the pixel electrodes and the fibrous structures formed thereon was superimposed on the spacer. Lastly, the insulating liquid containing dispersed electrophoretic particles was injected into the gap between the two glass substrates.

### Experimental Example 2

A display was prepared as in Experimental Example 1 except that an insulating liquid in which black electrophoretic particles were dispersed was prepared by the process below.

In 43 g of water, 42.624 g of sodium hydroxide and 0.369 g of sodium silicate were dissolved to obtain a solution D. To the solution D, 5 g of complex oxide fine particles (copper-iron-manganese oxide, DAIPYROXIDE Color TM3550 produced by Dainichiseika Color & Chemicals Mfg. Co., Ltd.) were added, followed by stirring (15 minutes) and then ultrasonic stirring (15 minutes at 30°C to 35°C). The solution D was then heated at 90°C. Thereto, 15 cm³ of a 0.22 mol/cm³ sulfuric acid and 7.5 cm³ of an aqueous solution of 6.5 mg of sodium silicate and 1.3 mg of sodium hydroxide were added dropwise over 2 hours. The solution D was then cooled to room temperature, and 1.8 cm³ of 1 mol/cm³ sulfuric acid was added thereto. The solution D was centrifuged (30 minutes at 3700 rpm) and decanted. Then the operation of re-dispersion in ethanol, centrifugation (30 minutes at 3500 rpm), and decantation was conducted twice. To each bottle, a mixture of 5 cm³ of ethanol and 0.5 cm³ of water was added, and ultrasonic stirring was conducted for 1 hour. As a result, a dispersion of silane-coated complex oxide particles was obtained.

Then 3 cm³ of water, 30 cm³ of ethanol, and 4 g of N-[3-(trimethoxysilyl)propyl]-N'-(4-vinylbenzyl)ethylenediamine hydrochloride (40% methanol solution) were mixed with each other and stirred for 7 minutes. Thereto, all of the dispersion was fed. The resulting mixed solution was stirred for 10 minutes and centrifuged (30 minutes at 3500 rpm). After decantation, a washing operation of re-dispersion in ethanol and centrifugation (30 minutes at 3500 rpm) was conducted twice. Decantation was conducted again and the solution was dried for 6 hours in a room temperature, reduced-pressure environment and then 2 hours in a 70°C reduced-pressure environment. As a result, a solid material was obtained.

To the solid material, 50 m³ of toluene was added to prepare a solution E, and the solution E was stirred for 12 hours with a roll mill. The solution E was charged in a three-necked flask, and 1.7 g of 2-ethylhexyl acrylate was fed, followed by stirring for 20 minutes under nitrogen stream. The solution E was stirred for 20 minutes at 50°C, and a solution F of 0.01 g of AIBN in 3 cm³ of toluene was added thereto, followed by heating at 65°C. The mixture was stirred for 1 hour, cooled to room temperature, poured into a bottle along with ethyl acetate, and centrifuged (30 minutes at 3500 rpm). The mixture was decanted, re-dispersed in ethyl acetate, and centrifuged (30 minutes at 3500 rpm), and this washing operation was conducted three times. Then the mixture was dried for 12 hours in a room temperature, reduced pressure environment and then for 2 hours in a 70°C reduced pressure environment. As a result, black electrophoretic particles composed of a polymer coating pigment were obtained.

An Isopar G (produced by Exxon Mobil Corporation) solution containing 0.5 g of N,N-dimethylpropane-1,3-diamine, 12-hydroxyoctadecanoic acid, and methoxysulfonyloxymethane (Solsperse 17000 produced by Lubrizol Ltd.) and 1.5% of sorbitan monolaurate (Span 20) was prepared as an insulating liquid. To 9.9 g of the insulating liquid, 0.1 g of electrophoretic particles were added, and the mixture was stirred with a bead mill for 5 minutes. After stirring in a homogenizer for 4 hours, beads were removed.

### Experimental Examples 3 and 4

A display was fabricated as in Experimental Example 2 except that the fibrous structure was formed by the process below. In Experimental Example 3, alcohol-soluble nylon (Elvamide 8061 produced by Du Pont) was used instead of PAN, and a methanol/dichloromethane (1:1) mixed solvent was used instead of N,N'-dimethylformamide. In Experimental Example 4, polyacrylamide (PAA) was used instead of PAN and water was used instead of N,N'-dimethylformamide.

### Experimental Examples 5 to 7

A display was fabricated as in Experimental Example 2 except that black electrophoretic particles were prepared by the process below. In Experimental Example 5, a 1:1 mixed solvent of 2,4-diamino-6-diallylamino-1,3,5-triazine and 2,5-dimethyl-1,5-hexadiene was used instead of 2-ethylhexyl acrylate. Furthermore, 5.0% of sorbitan monooleate (Span 80) was used instead of 1.5% of sorbitan monolaurate (Span 20). In Experimental Example 6, a 1:1:1 mixed solvent of 2,4-diamino-6-diallylamino-1,3,5-triazine, 2,5-dimethyl-1,5-hexadiene, and (perfluorohexyl)ethylene was used instead of 2-ethylhexyl acrylate. In Experimental Example 7, a 1:1 mixed solvent of N-[3-(trimethoxysilyl)propyl]-N'-(4-vinylbenzyl)ethylenediamine hydrochloride and 3-(2-aminoethylamino)propyltrimethoxysilane was used instead of N-[3-(trimethoxysilyl)propyl]-N'-(4-vinylbenzyl)ethylenediamine hydrochloride.

### Experimental Example 8

A display was fabricated as in Experimental Example 1 except that black electrophoretic particles and white electrophoretic particles were used.

The black electrophoretic particles were obtained as in Experimental Example 1 except that 140 g of carbon black (Printex A) was used. As a result, 20 g of polymer-coated carbon black was obtained as the black electrophoretic particles.

White electrophoretic particles were obtained by dissolving 20 cm³ of 3-(trimethoxysilyl)propyl methacrylate (Z6030 produced by Dow Corning Corporation) in 2 dm³ of an ethanol-water mixture (volume ratio = 95:5), adding acetic acid to the resulting solution to immediately adjust pH to 4.5, stirring the mixture for 5 minutes, adding 100 g of silica-coated titania (R960 produced by Du Pont) to the mixture, and stirring the resulting mixture for 10 to 20 minutes. Solid matter was settled, and the supernatant was decanted. The solid matter was washed twice with acetone and dried overnight at room temperature.

Into a reaction flask equipped with a nitrogen purging system, an electromagnetic stir rod, and a reflux column, 40 g of the solid matter, 50 cm³ of toluene, 45 cm³ of 2-ethylhexyl methacrylate, and 0.3 g of AIBN were placed and mixed. The reaction flask was purged with nitrogen for 20 minutes under stirring. Then the reaction flask was placed in an oil bath, gradually heated to 70°C under continuous stirring, and retained thereat for 20 hours. The solid matter was cooled, diluted with equivolume acetone, and centrifuged. Lastly, the supernatant was decanted, and the residue was re-dispersed in acetone or THF and washed. This treatment was repeated until the mass loss determined by thermogravimetry reached a particular level (e.g., 4.5 wt% to 10 wt%). As a result, 40 g of 2-ethylhexyl methacrylate-coated titania used as white electrophoretic particles was separated.

Then 4.0 g of the white electrophoretic particles, 0.24 g of an Emphos D-70-30C solution (10 wt%), and 47.8 g of Isopar G (produced by Exxon Mobil Corporation) used as an insulating liquid were mixed and homogeneously dispersed by ultrasonic treatment for 30 minutes. Then 0.16 g of the black electrophoretic particles, 0.16 g of an Emphos D-70-30C solution (10 wt%), and 47.8 g of Isopar G (produced by Exxon Mobil Corporation) used as an insulating liquid were mixed and homogeneously dispersed by ultrasonic treatment for 30 minutes. The white electrophoretic particle solution and the black electrophoretic particle solution were mixed and stirred for 24 hours.

In 2622.4 g of cold deionized water, 33.3 g of gelatin was added, and gelatin was dissolved under heating.

In 655.6 g of cold deionized water, 33.3 g of acacia (produced by Sigma-Aldrich Corporation) was dissolved under vigorous stirring. The mixture was then was heated to 40°C over 1 hour to conduct dissolution. To the gelatin solution under stirring, a mixed electrophoretic particle solution was gradually added. In order to emulsify the solution so that droplets had an average diameter of about 300 µm, the stirring rate was increased to 175 rpm and stirring was continued for 30 minutes at 40°C. The acacia solution was gradually added thereto, and 3 to 4 g of a 10 % aqueous acetic acid solution was added to decrease pH of the mixture to about 4.7, followed by vigorous stirring for 40 minutes. Under vigorous stirring, the temperature was decreased to 10°C over 2 hours and 16.7 g of glutaraldehyde was added thereto. The mixture was warmed to 25°C over 30 minutes and then vigorously stirred for 12 hours. The stirring was stopped, the mixture was discharged from the reactor, and capsules formed were separated. The capsules were settled and re-dispersed in deionized water until pH of washing water was 5.0.

The capsules and an aqueous urethane binder (NeoRez R-9320 produced by NeoResins) were mixed at a weight ratio of 1:9, and 0.3 wt% of hydroxypropylmethylcellulose was added to the mixture. Next, an indium-tin oxide-coated polyester film (125 µm in thickness) was slot-coated with the mixture while moving the film at a rate of 1 m/sec relative to a slot coating head. The coated film was dried in air for 10 minutes and in oven (temperature = 50°C) for 15 minutes. As a result, an electrophoretic medium (50 µm in thickness) containing capsules aligned substantially in a monolayer is obtained.

The capsule-coated-surface of the coated film was overcoated with an aqueous urethane binder (NeoRez R-9320 produced by NeoResins) by using a doctor blade (gap = 13 mil (330 µm)) and dried at 50°C for 20 minutes. The binder planarizes the capsule-coated-surface and functions as an adhesive. Lastly, the coated film was thermally laminated on the glass substrate on which the pixel electrodes (ITO) were formed by patterning.

### Experimental Example 9

A display was prepared as in Experimental Example 1 except that a black porous layer (perforated polymer sheet) and white electrophoretic particles were used.

The black porous layer was obtained as follows. First, 10 g of silicone elastomer (SYLGARD 184 produced by Dow Corning Corporation) and 0.2 g of carbon black (MA 100 produced by Mitsubishi Chemical Corporation) were mixed and then kneaded for 5 minutes with a polytron rotor/stator homogenizer (PT-3100 produced by KINEMATICA Inc.). To the kneaded material, 1 g of curing agent (curing agent for SYLGARD 184) was added, followed by stirring. The resulting mixture was applied on a PET film (thickness = 200 µm) with an applicator and heated at 100°C for 30 minutes to conduct curing. The coating was separated from the PET film to obtain a black silicone elastomer film (thickness = 150 µm). Then pores (pore diameter = 50 µm, pitch = 200 µm) were formed in the silicone elastomer film with a CO₂ laser machine to prepare a black porous layer.

The white electrophoretic particles were obtained by mixing 1 g of methylsiloxane-modified titanium oxide (CR-24 produced by Sakai Chemical Industry Co., Ltd.) used as electrophoretic particles, 10 g of methylphenyl silicone oil (KF-96-10 produced by Shin-Etsu Chemical Co., Ltd., viscosity = 10 mm²/sec), and 0.5 g of alkyl acrylate copolymer methyl polysiloxane (KP-545 produced by Shin-Etsu Chemical Co., Ltd.) used as an acryl silicone dispersant, and stirring the resulting mixture to obtain a dispersion.

The display was formed by first bonding two PET films (thickness = 100 µm), each with a center portion removed so that a peripheral portion 2 mm in width remained, to the upper and lower surfaces of the porous layer, respectively, and then bonding two glass substrate with electrodes (ITO) formed thereon to the upper and lower surfaces of the bonded product. The dispersion was then injected into the gap between the two glass substrates.

### Experimental Example 10

A display was prepared as in Experimental Example 9 except that black electrophoretic particles and a white porous layer (particle-containing perforated polymer sheet) were used.

The white porous layer was obtained as follows. First, 10 g of polyethersulfone (SUMIKAEXCEL PES4800P produced by Sumica Chemtex. Co., Ltd.), which is a raw material for the porous layer, was dissolved in 50 g of n-methylpyrrolidone. To the resulting solution, 1 g of methylsiloxane-modified titanium oxide (CR-24 produced by Sakai Chemical Industry Co., Ltd.) was added, and the mixture was kneaded with a homogenizer for 5 minutes. The kneaded material was applied to glass with an applicator and dried by heating at 150°C for 2 hours. The coating was separated from the glass to obtain a polyethersulfone film (thickness = 75 µm). Next, pores (pore diameter = 10 µm, pitch = 50µm) were formed in the polyethersulfone film by using an excimer laser.

The black electrophoretic particles were obtained by mixing 0.5 g of carbon black (MA 100 produced by Mitsubishi Chemical Corporation) used as electrophoretic particles, 7 g of methylphenyl silicone oil (KF-96-10 produced by Shin-Etsu Chemical Co., Ltd.), 3 g of carboxyl-containing silicone oil (X-22 produced by Shin-Etsu Chemical Co., Ltd.), and 0.5 g of alkyl acrylate copolymer methylpolysiloxane (KP-545 produced by Shin-Etsu Chemical Co., Ltd.) used as an acryl silicone dispersant, and stirring the resulting mixture to obtain a dispersion.

### Experimental Example 11

A display was prepared as in Experimental Example 9 except that black electrophoretic particles and a white particle-containing polymer sheet were used.

One gram of polymethyl methacrylate particles (diameter = 30 µm), which are a raw material for a polymer sheet, 0.48 g of hydrophobic titanium oxide (CR-50-2 produced by Ishihara Sangyo Kaisha, Ltd., primary particle size = 0.3 µm), and 0.04 g of polyvinyl alcohol (saponification value = 98% and degree of polymerization = 1700) were mixed, and water was added thereto so that the total solid content was 30 wt%. The resulting solution was applied, by using an applicator, on a glass substrate with electrodes (ITO) formed thereon, heated on a hot plate (temperature = 50°C) to obtain a coating (thickness = 100 µm). A solvent that dissolves only the polymethyl methacrylate particles was prepared. The glass substrate with the coating was immersed in the solvent and ultrasonically washed to obtain a white particle-containing polymer sheet (thickness = 100 µm).

The black electrophoretic particles were obtained as follows. First, 1 g of surfactant, hydroxy fatty acid oligomer (WS-100 produced by ADEKA CORPORATION) was dissolved in 10 cm³ of phenylxylylethane (Hisol SAS-296 produced by Nippon Petrochemicals Co., Ltd.). At the same time, 0.1 g of electrophoretic particles, i.e., black low-valence titanium oxide (titanium black) processed with a titanate coupling agent (Tilack D titanium surface treated product produced by Ako Kasei Co., Ltd., primary particle diameter = 0.03 µm) was also added to obtain a liquid mixture. The liquid mixture was processed in a ball mill using zirconia beads. As a result, a dispersion containing an insulating liquid and black low-valence titanium oxide dispersed in the insulating liquid was obtained.

A glass substrate having electrodes (ITO) and the particle-containing polymer sheet attached thereon was superimposed on another glass substrate having electrodes (ITO) so that the electrodes faced each other. Of the four sides of the two glass substrates, two sides opposing each other were bonded with each other with an adhesive to prepare a glass cell. Lastly, the glass cell was immersed in the dispersion, the dispersion was charged into the gap between the two glass substrates by evacuation, and the glass cell was sealed.

The displays obtained from Experimental Examples 1 to 11 were studied to determined display performances such as the black reflectance (%), the white reflectance (%), contrast, and the driving voltage (V). The results are shown in Table 1.

The black reflectance and white reflectance were measured with a spectrophotometer (MCPD-7000 produced by Otsuka Electronics Co., Ltd.) in a direction normal to a reference diffuser plate under a 45° ring light. The voltage at which the reflectance was stable for both black display and white display was assumed to be the driving voltage, and the reflectance observed under each display mode was defined to be the black reflectance and the white reflectance. The contrast is the ratio of the white reflectance to the black reflectance.

**Table 1**

| Exp. Ex.* | Electrophoretic device | | Black reflectance (%) | White reflectance (%) | Contrast | Driving Voltage (V) |
|---|---|---|---|---|---|---|
| | Black | White | | | | |
| 1 | Electrophoretic particles | Porous layer = particle-containing fibrous structures (PAN) | 3.2 | 55 | 17.2 | ±10 |
| 2 | Electrophoretic particles | Porous layer = particle-containing fibrous structures (PAN) | 1.8 | 52 | 28.9 | ±10 |
| 3 | Electrophoretic particles | Porous layer = particle-containing fibrous structures (nylon) | 2.4 | 48 | 20.0 | ±12 |
| 4 | Electrophoretic particles | Porous layer = particle-containing fibrous structures (PAA) | 2.3 | 50 | 21.7 | ±11 |
| 5 | Electrophoretic particles | Porous layer = particle-containing fibrous structures (PAN) | 1.8 | 50 | 27.8 | ±11 |
| 6 | Electrophoretic particles | Porous layer = particle-containing fibrous structures (PAN) | 2.0 | 53 | 26.5 | ±10 |
| 7 | Electrophoretic particles | Porous layer = particle-containing fibrous structures (PAN) | 2.1 | 51 | 24.3 | ±12 |
| 8 | Electrophoretic particles | Electrophoretic particles | 3.6 | 41 | 11.4 | ±15 |
| 9 | Porous layer = perforated polymer sheet | Electrophoretic particles | 2.5 | 36 | 14.4 | ±30 |
| 10 | Electrophoretic particles | Porous layer = particle-containing perforated polymer sheet | 2.2 | 34 | 15.4 | ±30 |
| 11 | Electrophoretic particles | Particle-containing polymer sheet | 12 | 35 | 2.9 | ±25 |

| | | | | | | |
|---|---|---|---|---|---|---|
| *Exp. Ex.: Experimental Example | | | | | | |

When a particle-containing fibrous structures were used as a porous layer (Experimental Examples 1 to 7), contrast was high and the driving voltage was low compared to when such structures were not used (Experimental Examples 8 to 11).

This result indicates the following. When a porous layer (particle-containing fibrous structures) is used to create white display, the white reflectance increases significantly while the black reflectance remains substantially the same. Thus, the contrast ratio is significantly increased. Moreover, since the thickness of the porous layer may be small despite the high white reflectance, the electrophoretic particles easily migrate through the pores in the porous layer, the speed of response is increased, and the driving voltage is lowered. The trade-off relationship between the improved contrast and low driving voltage can be canceled, and thus high contrast, rapid response, and low power consumption can all be achieved simultaneously.

Although the present technology is described above through various embodiments, the scope of the technology described herein is not limited to these embodiments and various modifications are possible. For example, the electrophoretic device may be used in electronic appliances other than displays.

## Claims

1. An electrophoretic device (50) comprising:
an insulating liquid (51);
electrophoretic particles (52) in the insulating liquid; and
a porous layer (53) including one or more fibrous structures, the porous layer being disposed in the insulating liquid,
wherein the one or more fibrous structures include non-electrophoretic particles (22) having an optical reflective property different from that of the electrophoretic particles, wherein the non-electrophoretic particles are supported and retained by the one or more fibrous structures;
and **characterized in that** the non-electrophoretic particles are at least partly buried inside the one or more fibrous structures.

2. The electrophoretic device according to Claim 1, wherein the one or more fibrous structures are composed of a polymer material or an inorganic material.

3. The electrophoretic device according to Claim 1 or 2, wherein the one or more fibrous structures have an average fiber diameter of 10 µm or less.

4. The electrophoretic device according to any preceding Claim, wherein the one or more fibrous structures comprise nanofibres formed by electrospinning, said nanofibres having a diameter of 0.001µm to 0.1 µm and a length at least 100 times greater than their diameter.

5. The electrophoretic device according to any preceding Claim, wherein the electrophoretic particles and the non-electrophoretic particles are composed of an organic pigment, an inorganic pigment, a dye, a carbon material, a metal material, a metal oxide, glass, or a polymer material.

6. The electrophoretic device according to any preceding Claim, wherein the non-electrophoretic particles have a reflectance higher than that of the electrophoretic particles.

7. A display comprising:
a pair of substrates (30, 40), at least one of which is optically transparent; and
an electrophoretic device according to any preceding claim disposed between the pair of substrates.

8. An electronic apparatus including the display of claim 7.

## Patentansprüche

1. Elektrophoresevorrichtung (50), welche Folgendes umfasst:
eine isolierende Flüssigkeit (51),
elektrophoretische Teilchen (52) in der isolierenden Flüssigkeit und
eine poröse Schicht (53), welche eine oder mehrere Faserstrukturen aufweist, wobei die poröse Schicht in der isolierenden Flüssigkeit angeordnet ist,
wobei die eine oder die mehreren Faserstrukturen nicht-elektrophoretische Teilchen (22) mit einer optisch reflektierenden Eigenschaft, die von jener der elektrophoretischen Teilchen verschieden ist, aufweisen, wobei die nicht-elektrophoretischen Teilchen von der einen oder den mehreren Faserstrukturen getragen und gehalten werden,
**dadurch gekennzeichnet, dass** die nicht-elektrophoretischen Teilchen zumindest teilweise in der einen oder den mehreren Faserstrukturen vergraben sind.

2. Elektrophoresevorrichtung nach Anspruch 1, wobei die eine oder die mehreren Faserstrukturen aus einem Polymermaterial oder einem anorganischen Material zusammengesetzt sind.

3. Elektrophoresevorrichtung nach Anspruch 1 oder 2, wobei die eine oder die mehreren Faserstrukturen einen durchschnittlichen Faserdurchmesser von 10 µm oder weniger aufweisen.

4. Elektrophoresevorrichtung nach einem der vorhergehenden Ansprüche, wobei die eine oder die mehreren Faserstrukturen Nanofasern umfassen, die durch Elektrospinnen gebildet sind, wobei die Nanofasern einen Durchmesser von 0,001 µm bis 0,1 µm und eine Länge, die wenigstens 100 Mal größer als ihr Durchmesser ist, aufweisen.

5. Elektrophoresevorrichtung nach einem der vorhergehenden Ansprüche, wobei die elektrophoretischen Teilchen und die nicht-elektrophoretischen Teilchen aus einem organischen Pigment, einem anorganischen Pigment, einem Farbstoff, einem Carbonmaterial, einem Metallmaterial, einem Metalloxid, Glas oder einem Polymermaterial bestehen.

6. Elektrophoresevorrichtung nach einem der vorhergehenden Ansprüche, wobei die nicht-elektrophoretischen Teilchen einen Reflexionsgrad aufweisen, der höher als jener der elektrophoretischen Teilchen ist.

7. Anzeige, welche Folgendes umfasst:
ein Paar Substrate (30, 40), von denen wenigstens eines optisch transparent ist, und
eine Elektrophoresevorrichtung nach einem der vorhergehenden Ansprüche, die zwischen den ein Paar bildenden Substraten angeordnet ist.

8. Elektronische Vorrichtung, welche die Anzeige nach Anspruch 7 aufweist.

## Revendications

1. Dispositif électrophorétique (50), comprenant :
un liquide isolant (51) ;
des particules électrophorétiques (52) dans le liquide isolant ; et
une couche poreuse (53) comprenant une ou plusieurs structures fibreuses, la couche poreuse étant disposée dans le liquide isolant,
dans lequel la ou les structures fibreuses comprennent des particules non-électrophorétiques (22) ayant une propriété de réflexion optique différente de celle des particules électrophorétiques, les particules non-électrophorétiques étant soutenues et retenues par la ou les structures fibreuses ;
et **caractérisé en ce que** les particules non-électrophorétiques sont au moins partiellement enterrées à l'intérieur de la ou des structures fibreuses.

2. Dispositif électrophorétique selon la revendication 1, dans lequel la ou les structures fibreuses sont composées d'un matériau polymère ou d'un matériau inorganique.

3. Dispositif électrophorétique selon la revendication 1 ou 2, dans lequel la ou les structures fibreuses ont un diamètre moyen de fibre de 10 µm ou moins.

4. Dispositif électrophorétique selon l'une quelconque des revendications précédentes, dans lequel la ou les structures fibreuses comprennent des nanofibres formées par électrofilage, lesdites nanofibres ayant un diamètre de 0,001 µm à 0,1 µm et une longueur au moins 100 fois supérieure à leur diamètre.

5. Dispositif électrophorétique selon l'une quelconque des revendications précédentes, dans lequel les particules électrophorétiques et les particules non-électrophorétiques sont composées d'un pigment organique, d'un pigment inorganique, d'un colorant, d'un matériau carboné, d'un matériau métallique, d'un oxyde métallique, de verre ou d'un matériau polymère.

6. Dispositif électrophorétique selon l'une quelconque des revendications précédentes, dans lequel les particules non-électrophorétiques ont un indice de réflexion supérieur à celui des particules électrophorétiques.

7. Affichage, comprenant :
une paire de substrats (30, 40), dont au moins l'un est optiquement transparent ; et
un dispositif électrophorétique selon l'une quelconque des revendications précédentes, disposé entre les deux substrats.

8. Appareil électronique comprenant l'affichage de la revendication 7.
